# EUROPÄISCHE PATENTSCHRIFT

(11) **EP 2 789 853 B1**
(45) Veröffentlichungstag und Bekanntmachung des Hinweises auf die Patenterteilung: **21.08.2024**
(21) Anmeldenummer: 14000186.8
(22) Anmeldetag: 18.01.2014
(51) Int. Cl.: F04B 41/04, F02D 17/02

(54) **Vorrichtung zum Fördern von Druckluft für druckluftbetriebene Einrichtungen in Kraftfahrzeugen**
Device for conveying compressed air for devices in motor vehicles operated by compressed air
Dispositif de transport d'air comprimé pour des installations fonctionnant à l'air comprimé dans des véhicules automobiles

(30) Priorität: 09.04.2013 AT 2662013
(43) Veröffentlichungstag der Anmeldung: 15.10.2014
(73) Patentinhaber: MAN Truck & Bus SE, 80995 München (DE)
(72) Erfinder: Raab, Gottfried, 4320 Perg (AT); Leitenmayr, Franz, 4320 Perg (AT); Klinger, Heidrun, 4400 Steyr (AT)
(74) Vertreter: Liebl, Thomas

(56) Entgegenhaltungen:
- DE-A1- 19 902 052
- DE-C- 891 361
- GB-A- 699 182

## Beschreibung

Die vorliegende Erfindung betrifft eine Vorrichtung zum Fördern von Druckluft für druckluftbetriebene Einrichtungen in Kraftfahrzeugen, insbesondere von Bremseinrichtungen in Nutzfahrzeugen, gemäß dem Oberbegriff des Patentanspruchs 1 oder gemäß dem Patentanspruch 3. Ferner betrifft die Erfindung ein Fahrzeug nach Anspruch 13, ein Verfahren nach Anspruch 14 und ein Verfahren nach Anspruch 15.

Eine Möglichkeit zur Druckluftversorgung von zum Beispiel der Bremsanlage von Nutzkraftfahrzeugen besteht darin, die Brennkraftmaschine bei definierten Betriebszuständen und Betriebszyklen, in denen verwendbarer Überdruck in den Brennräumen zumindest eines Zylinders herrscht, direkt oder zusätzlich als Kompressor einzusetzen. Problematisch ist dabei jedoch, dass sofern eine Entnahme direkt aus dem Brennraum erfolgen soll, der Gaswechsel als solcher nicht beeinträchtigt werden darf bzw. die gewünschte Konzeption der Brennraumgestaltung zu erhalten ist.

Die DE 199 02 052 A1 offenbart eine Brennkraftmaschine mit einem Verdichter zur Drucklufterzeugung. Aus der GB 699 182 A sind Verbesserungen bei Verbrennungsmotoren bekannt.

Aufgabe der Erfindung ist es deshalb, eine Vorrichtung der gattungsgemäßen Art vorzuschlagen, die trotz direkter Entnahme von Druckluft aus dem Brennraum zumindest eines Zylinders der Brennkraftmaschine diesen nicht baulich oder gasdynamisch beeinträchtigt und die konstruktiv einfach verwirklichbar ist.

Die Lösung dieser Aufgabe gelingt mit den Merkmalen der unabhängigen Patentansprüche. Vorteilhafte Weiterbildungen und Ausgestaltungen der Erfindung sind in den Unteransprüchen angeführt.

Erfindungsgemäß wird vorgeschlagen, dass das Druckluft abführende Ventil außerhalb des Brennraums angeordnet und, insbesondere über einen in den Brennraum mündenden Verbindungskanal, an den Brennraum angeschlossen ist. Der Vorschlag ermöglicht sowohl eine baulich und fertigungstechnisch günstige Anordnung des Ventils, wobei zudem die Brennraumgestaltung des zumindest einen Zylinders nahezu unverändert beibehalten werden kann. Die Mündung des Verbindungskanals kann relativ frei gestaltet und an einer Brennraumoberfläche positioniert werden.

Insbesondere kann das Ventil im Zylinderkopf der Brennkraftmaschine von der zylinderkopfseitigen Brennraumoberfläche zurückgesetzt oder abgesetzt angeordnet und/oder über den Verbindungskanal mit dem Brennraum strömungstechnisch günstig verbunden sein. Der Verbindungskanal kann dabei bevorzugt als Bohrung ausgeführt sein.

Des Weiteren kann das Ventil im Wesentlichen parallel zu Gaswechselventilen der Brennkraftmaschine ausgerichtet sein, insbesondere wenn die Gaswechselventile und das Ventil parallel zur Zylindermittelachse des zumindest einen Zylinders der Brennkraftmaschine angeordnet sind. Daraus resultieren unter anderem bauliche und fertigungstechnische Vorteile bei der Herstellung des zum Beispiel gegossenen Zylinderkopfs und dessen spanender Bearbeitung.

Das Ventil ist bevorzugt mit einem Abströmkanal verbunden, der entsprechend der jeweiligen Ventilstellung mit Druckluft beaufschlagbar ist, das heißt einen ventilgesteuerten Abströmkanal ausbildet.

Zur Erzielung einer baulich günstigen und einfachen Ableitung der aus dem Brennraum abzuführenden Druckluft kann bevorzugt der über das Ventil gesteuerte Abströmkanal (zum Beispiel ca. 90 Grad abknickend) in eine Seitenfläche des Zylinderkopfs münden und dort an eine Druckleitung mit einem Rückschlagventil angeschlossen sein.

Das Ventil ist erfindungsgemäß ferner über eine Betätigungseinrichtung, bevorzugt mechanisch und/oder elektrisch und/oder hydraulisch und/oder pneumatisch, gesteuert. Die Steuerung kann dabei bedarfsabhängig und/oder abhängig von definierten bzw. vorgegebenen Betriebszuständen der Brennkraftmaschine (insbesondere bei abgasfreiem Überdruck im Brennraum) und/oder im Schubbetrieb oder Motorbremsbetrieb erfolgen.

Bei einer nicht von der Erfindung umfassten Vergleichsform kann das Ventil über eine von der Brennkraftmaschine angetriebene Nockenwelle und ein Betätigungselement zeitweilig geöffnet sein. Dem Betätigungselement kann dann bevorzugt ein das Ventil ständig offen haltendes, zum Beispiel elektrisch, hydraulisch und/oder pneumatisch angesteuertes Steuerelement überlagert werden.

Das Betätigungselement kann dabei bevorzugt ein über die Nockenwelle angetriebener, zweiarmiger Kipphebel sein, dessen mit dem Ventil und dem Nocken der Nockenwelle korrespondierende Arme über Stellelemente, zum Beispiel Kolben-Zylinder-Einheiten als Steuerelemente alternierend mit Druckmittel beaufschlagbar sind. Derartige Kolben-Zylinder-Einheiten können zum Beispiel hydraulisch und/oder pneumatisch betätigt sein.

Erfindungsgemäß ist die Betätigungseinrichtung für das Ventil eine Kolben-Zylinder-Einheit mit zumindest einem Kolben, der das über eine Ventilfeder in Schließstellung vorgespannte Ventil in Öffnungsrichtung oder in Öffnungsrichtung und in Schließrichtung beaufschlagt, zum Beispiel hydraulisch oder pneumatisch beaufschlagt. Der zumindest eine Kolben kann alternierend, in Abhängigkeit von unterschiedlichen Betriebszuständen der Brennkraftmaschine an entsprechende Druckmittelquellen und/oder an Steuerventile angeschlossen werden.

Erfindungsgemäß ist ein Kolben der Kolben-Zylinder-Einheit in einer Zylinderbüchse verschiebbar geführt, wobei zu beiden Seiten des Kolbens je ein Druckraum ausgebildet ist. Auf der ventilzugewandten Seite des Kolbens ist eine, vorzugsweise in einer Abstandshülse angeordnete, Federeinrichtung, vorzugsweise eine Druckfeder, höchst bevorzugt eine Schraubendruckfeder, angeordnet, die sich mittelbar oder unmittelbar an der Zylinderbüchse abstützt und andererseits auf das Ventil wirkt. Die Vorspannkraft dieser Federeinrichtung ist dabei so ausgelegt, dass diese größer beziehungsweise stärker ist als die das Ventil in die Schließstellung vorspannende Kraft der Ventilfeder. Zudem ist die Vorspannkraft dieser Federeinrichtung so ausgelegt, dass diese im Verdichtungstakt zeitlich vor der Brennstoffzündung ab einem definierten Brennraumdruck außer Eingriff bringbar ist, insbesondere zusammendrückbar ist, und somit das Ventil mittels der Ventilfeder geschlossen werden kann. Ein derartiger Aufbau kann auf einfache Weise hergestellt werden und zahlt sich vor allem durch eine sehr hohe Funktionssicherheit aus.

Gemäß einer besonders bevorzugten Ausgestaltung hierzu kann zudem vorgesehen sein, dass die Federeinrichtung über eine Leerwegkappe oder über eine Leerwegkappe mitsamt zugeordneter ventilseitiger Stütztasse auf das Ventil wirkt. Die Leerwegkappe ist bevorzugt auf einer mit dem Kolben verbundenen Stellstange verschiebbar gelagert und mit dieser koppelbar, und zwar dergestalt, dass bei Druckbeaufschlagung eines bezogen auf die Ventilseite unteren Kolbenraums und einer dadurch erfolgenden Verlagerung des Kolbens vom Ventil weg, die Leerwegkappe vom Ventil wegverlagert wird und die Federeinrichtung dadurch außer Wirkeingriff gebracht wird, wodurch das Ventil durch die Kraft der Ventilfeder geschlossen werden kann. Bei einer Druckbeaufschlagung eines bezogen auf die Ventilseite oberen Kolbenraums, oder bei drucklosem oberen und unteren Kolbenraum, wird eine Verschiebung der Leerwegkappe mittels der Federeinrichtung relativ zur Stellstange freigegeben, wodurch die Federeinrichtung die Leerwegkappe in Richtung Ventil vorspannen kann und damit auf das Ventil einwirken kann, sodass dieses gegen die Kraft der Ventilfeder geöffnet wird. Bei Druckbeaufschlagung des oberen Kolbenraums wird das Ventil dabei während der Zeitdauer dieser Druckbeaufschlagung dauerhaft geöffnet. Bei drucklosem oberen und unteren Kolbenraum ist dagegen das Ventil nur solange geöffnet bis im Verdichtungstakt der Brennkraftmaschine zeitlich vor der Zündung des Brennstoffs ein definiert hoher Brennraumdruck vorherrscht, der das Ventil gegen die Kraft der Federeinrichtung schließt.

In einer weiteren konkreten Ausführungsform der Betätigungseinrichtung kann die Kolben-Zylinder-Einheit zwei gegensinnig beaufschlagbare Kolben aufweisen. Hier kann dann zum Beispiel der eine Kolben entsprechend beaufschlagt das Ventil in definierten Betriebszuständen der Brennkraftmaschine, insbesondere im Schubbetrieb und/oder Motorbremsbetrieb des Kraftfahrzeugs, ständig offen halten und der andere Kolben das Ventil abhängig von definierten beziehungsweise definiert vorgebbaren Betriebszyklen der Brennkraftmaschine periodisch öffnen.

Gemäß einer hierzu besonders bevorzugten konkreten Ausgestaltung kann ein Druckraum zwischen den beiden Kolben so angeordnet und ausgebildet sein, dass der untere Kolben bei einer Druckbeaufschlagung des Druckraums in Richtung Ventil verlagerbar ist, und zwar vorzugsweise so lange in Richtung Ventil verlagerbar ist, bis der untere Kolben an einem definierten Anschlag zur Anlage kommt. Weiter ist auf der ventilzugewandten Seite des unteren Kolbens eine Federeinrichtung, bevorzugt eine Druckfeder, höchst bevorzugt eine Schraubendruckfeder, abgestützt, die auf das Ventil wirkt, wobei die Vorspannkraft der Federeinrichtung größer ist als diejenige einer das Ventil in die Schließstellung vorspannenden Ventilfeder. Die Vorspannkraft der Federeinrichtung ist zudem so ausgelegt, dass diese im Verdichtungstakt der Brennkraftmaschine zeitlich vor der Brennstoffzündung ab einem definierten Brennraumdruck außer Eingriff bringbar ist, insbesondere zusammendrückbar ist, und somit das Ventil mittels der Ventilfeder geschlossen werden kann. Auch mit einem derartigen Aufbau wird eine alternative Betätigungseinrichtung mit höherer Funktionssicherheit zur Verfügung gestellt. Konkret können dabei die beiden Kolben so in der Kolben-Zylinder-Einheit aufgenommen und angeordnet sein, dass die Federeinrichtung im drucklosen Zustand nicht wirkt und das Ventil mittels der Vorspannkraft der Ventilfeder geschlossen ist.

Erfindungsgemäß vorgeschlagen ist ferner eine Vorrichtung zum Fördern von Druckluft für druckluftbetriebene Einrichtungen in Kraftfahrzeugen, insbesondere von Bremseinrichtungen in Nutzfahrzeugen, gemäß einer weiteren Ausführungsform mit einem steuerbaren Ventil, über das aus einem Brennraum von zumindest einem Zylinder einer Brennkraftmaschine Druckluft entnehmbar ist, wobei das Ventil außerhalb des Brennraums angeordnet und an den Brennraum angeschlossen ist, und mit einer Betätigungseinrichtung, wobei das Ventil über die Betätigungseinrichtung gesteuert ist, und wobei die Betätigungseinrichtung für das Ventil eine Kolben-Zylinder-Einheit mit zumindest einem Kolben ist, der das über eine Ventilfeder in Schließstellung vorgespannte Ventil in Öffnungsrichtung oder in Öffnungsrichtung und in Schließrichtung beaufschlagt. Erfindungsgemäß weist die Kolben-Zylinder-Einheit zwei gegensinnig beaufschlagbare Kolben auf, wobei vorgesehen ist, dass der eine Kolben bei einer entsprechenden Beaufschlagung das Ventil in definierten Betriebszuständen der Brennkraftmaschine ständig offen hält und der andere Kolben das Ventil in definierten Betriebszuständen der Brennkraftmaschine periodisch öffnet. Zusätzlich ist ein Druckraum zwischen den beiden Kolben so angeordnet und ausgebildet, dass der untere Kolben bei einer Druckbeaufschlagung des Druckraums in Richtung Ventil verlagerbar ist, bis der untere Kolben an einem Anschlag zur Anlage kommt, wobei auf der ventilzugewandten Seite des unteren Kolbens eine Federeinrichtung abgestützt ist, die auf das Ventil wirkt, wobei die Vorspannkraft der Federeinrichtung größer ist als diejenige einer das Ventil in die Schließstellung vorspannenden Ventilfeder und wobei die Vorspannkraft der Federeinrichtung zudem so ausgelegt ist, dass diese im Verdichtungstakt der Brennkraftmaschine zeitlich vor der Brennstoffzündung ab einem definierten Brennraumdruck außer Eingriff bringbar ist, und somit das Ventil mittels der Ventilfeder schließbar ist.

Die sich in Verbindung mit dem Fahrzeug und dem Verfahren ergebenden Vorteile wurden ebenfalls bereits zuvor in Verbindung mit der ausführlichen Würdigung der erfindungsgemäßen Vorrichtung ausführlich gewürdigt, sodass diesbezüglich auf die zuvor gemachten Ausführungen verwiesen wird.

Mehrere Ausführungsbeispiele der Erfindung sind im Folgenden anhand der beigefügten, schematischen Zeichnung näher erläutert. Es zeigen:
- Fig. 1: einen Längsschnitt durch einen Zylinder einer Brennkraftmaschine mit einem in dessen Brennraum mündenden Verbindungskanal, mittels dem über ein steuerbares Ventil unter Überdruck stehende Luft für eine druckluftbetätigte Einrichtung in zum Beispiel einem Nutzkraftfahrzeug förderbar ist;
- Fig. 2: eine nicht von der Erfindung umfasste und auf das Ventil wirkende, mechanisch-hydraulisch ausgelegte Betätigungseinrichtung mit einer Nockenwelle, einem Kipphebel und zwei Kolben-Zylinder-Einheiten, die in den Kipphebel integriert sind;
- Fig. 3: eine pneumatisch gesteuerte Betätigungseinrichtung für das Ventil mit einer Kolben-Zylinder-Einheit mit einem Kolben, der beiderseits abhängig von Betriebszuständen der Brennkraftmaschine beaufschlagbar ist, und
- Fig. 4: eine zur Fig. 3 alternative, hydraulisch steuerbare Betätigungseinrichtung mit zwei auf das Ventil wirkenden Kolben.

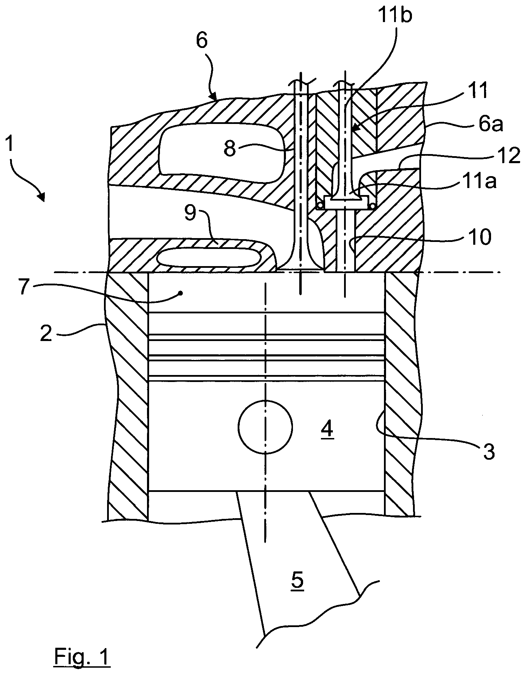

Die Fig. 1 zeigt grob schematisch einen teilweisen Querschnitt durch eine zum Beispiel als Viertakt-Hubkolben-Brennkraftmaschine ausgebildete Brennkraftmaschine 1 für zum Beispiel ein Nutzfahrzeug als Kraftfahrzeug mit einem Zylinder-Kurbelgehäuse 2, einer darin angeordneten Zylinderbohrung 3, in der ein Hubkolben 4 geführt und an ein nach unten ragendes Pleuel 5 angelenkt ist, und mit einem gasdicht auf das Zylinder-Kurbelgehäuse 2 aufgesetzten Zylinderkopf 6. Die Brennkraftmaschine 1 kann insbesondere ein Dieselmotor mit entsprechend hoher Verdichtung sein.

Das Zylinder-Kurbelgehäuse 2, der Hubkolben 4 und der Zylinderkopf 6 schließen einen Brennraum 7 ein, der über Gaswechselventile 8 (Ein- und Auslassventile) und entsprechende Kanäle 9 im Zylinderkopf 6 mit Verbrennungsluft versorgt bzw. an Abgasleitungen angeschlossen ist.

In den Brennraum 7 mündet ferner ein neben den Gaswechselventilen 8 positionierter Verbindungskanal 10, der über ein Ventil 11 mit einem Ventilteller 11a und einem Ventilschaft 11b im Durchströmquerschnitt steuerbar ist und der im geöffnetem Zustand des Ventils 11 den Verbindungskanal 10 mit einem Abströmkanal 12, hier lediglich beispielhaft mit einem um ca. 90 Grad abknickenden und in eine Seitenfläche 6a des Zylinderkopfs 6 mündenden Abströmkanal 12, verbindet.

An den Abströmkanal 12 ist eine nicht dargestellte Druckleitung mit einem Rückschlagventil angeschlossen, die beispielsweise an einen Vorratsbehälter der Druckluft-Betriebsbremse des Nutzkraftfahrzeugs angeschlossen ist.

Im Ausführungsbeispiel gemäß Fig. 1 sind die Gaswechselventile 8 und das im Zylinderkopf 6 axial verschiebbar geführte Ventil 11 lediglich beispielhaft parallel zur Zylindermittelachse und parallel zueinander angeordnet. Das Ventil 11 könnte aber auch schräg oder um bis zu 90 Grad zur Mittelachse der Gaswechselventile 8 versetzt bzw. geneigt im Zylinderkopf 6 angeordnet sein.

Mittels des Ventils 11 kann bei im Brennraum 7 anliegendem Überdruck Luft abgeleitet und über den Abströmkanal 12 und die mit einem Rückschlagventil versehene Druckleitung zum Beispiel zum Vorratsbehälter der Betriebsbremse und/oder zu anderen mit Druckluft betriebenen Einrichtungen gefördert werden.

Ein verwertbarer Überdruck im Brennraum 7 liegt zum Beispiel im Schubbetrieb der dann unbefeuerten Brennkraftmaschine 1 oder im Motorbremsbetrieb bei zum Beispiel einer geschlossenen Abgasklappe im Abgassystem der Brennkraftmaschine 1 oder aber bei definierten Betriebszyklen der Brennkraftmaschine 1 (im Verdichtungstakt zeitlich vor Zündung des Brennstoffs) vor.

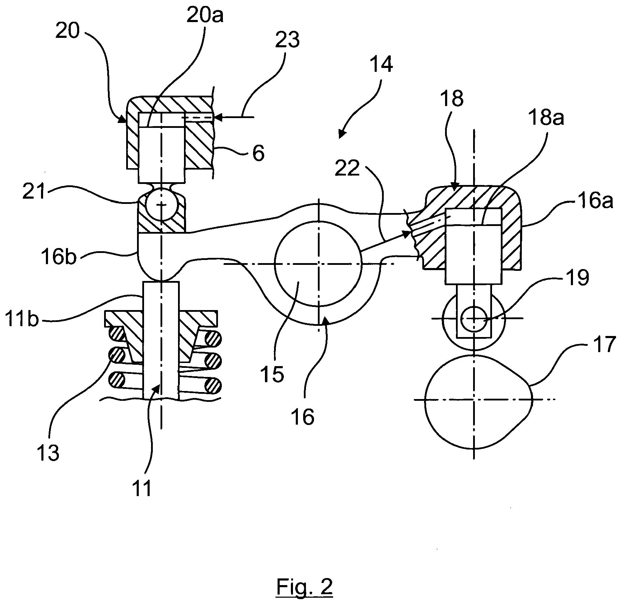

Die Steuerung des zum Beispiel über eine Ventilfeder 13 in den geschlossenen Zustand vorgespannten Ventils 11 (Fig. 2) erfolgt beispielsweise über eine nicht erfindungsgemäße Betätigungseinrichtung 14, die zum Beispiel mechanisch-hydraulisch gesteuert ist.

Die Betätigungseinrichtung 14 weist im Beispielfall der Fig. 2 einen im Zylinderkopf 6 über eine Achse 15 schwenkbar gelagerten, zweiarmigen Kipphebel 16 auf, dessen einer Arm 16a über einen Nocken 17 einer nicht weiter dargestellten Nockenwelle angetrieben ist, während dessen gegenüberliegender Arm 16b auf einen Ventilschaft 11b des Ventils 11 wirkt. Es sei bemerkt, dass zur Funktion des Ventils 11 ein relativ geringer Ventilhub von zum Beispiel 1 bis 4 mm, bevorzugt von 3 mm, ausreichend sein kann.

In den Arm 16a des Kipphebels 16 ist eine Kolben-Zylinder-Einheit 18 integriert, deren Kolben 18a über einen Rollenstößel 19 mit dem Nocken 17 wie nachstehend beschrieben zusammenwirkt. Eine weitere Kolben-Zylinder-Einheit 20 ist im Zylinderkopf 6 angeordnet, wobei deren Kolben 20a über ein sphärisch gelagertes Druckstück 21 auf den gegenüber liegenden Arm 16b des Kipphebels 16 wirkt.

Der Druckraum der Kolben-Zylinder-Einheit 18 ist an eine nur durch den Pfeil 22 angedeutete Druckölversorgung mit einem nicht dargestellten Steuerventil derart angeschlossen, dass bei Druckbeaufschlagung der Kipphebel 16 wirksam wird, wobei über den Nocken 17 zu definierten Betriebszyklen der Brennkraftmaschine das Ventil 11 periodisch geöffnet wird. Im drucklosen Zustand ist der Kipphebel 16 nicht betätigt und das Ventil 11 bleibt geschlossen; es erfolgt keine Druckluftentnahme.

Über die Kolben-Zylinder-Einheit 20, die an eine mit dem Pfeil 23 angedeutete Druckölversorgung angeschlossen ist, kann insbesondere bei Schubbetrieb oder bei Motorbremsbetrieb mit geschlossener Abgasklappe durch entsprechende Druckbeaufschlagung der Kolben-Zylinder-Einheit das Ventil 11 ständig offen gehalten werden. In diesem Betriebszustand ist die Brennkraftmaschine nicht befeuert und wirkt für den einen Zylinder 3 oder gegebenenfalls mit mehreren Zylindern als Kompressor mit bei Bedarf entsprechender Druckluftförderung.

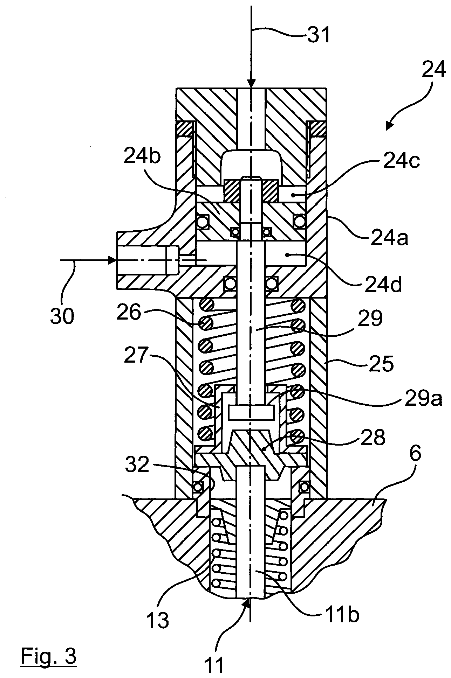

In der Fig. 3 ist eine zur Fig. 2 alternative, erfindungsgemäße und zum Beispiel pneumatisch gesteuerte Betätigungseinrichtung 24 dargestellt, die durch eine Kolben-Zylinder-Einheit gebildet ist und eine am Zylinderkopf 6 angeordnete Zylinderbüchse 24a aufweist, in der ein Kolben 24b verschiebbar geführt ist, wobei oberhalb und unterhalb des Kolbens 24b je ein Druckraum 24c, 24d gebildet ist.

Unterhalb der Zylinderbüchse 24a ist eine durch ein separates Bauteil gebildete oder einstückig und/oder materialeinheitlich mit der Zylinderbüchse 24a ausgebildete Abstandshülse 25 vorgesehen, in der eine Schraubendruckfeder 26 angeordnet ist, die einerseits an der Zylinderbüchse 24a abgestützt ist und andererseits über eine Leerwegkappe 27 und eine Stütztasse 28 auf den Ventilschaft 11b des Ventils 11 wirkt. Die Vorspannkraft der Schraubendruckfeder 26 ist stärker als die der Ventilfeder 13, so dass im drucklosen Zustand das Ventil 11 definiert geöffnet ist. Die Stütztasse 28 liegt dabei, wie aus der Zeichnung ersichtlich ist, an einem abstandshülsenseitigen Anschlag an, der hier beispielhaft durch eine Anschlaghülse 32 gebildet ist (auch eine integrale wandseitige Ausbildung in der Art eines Durchmessersprungs oder Anschlagrings ist selbstverständlich möglich). Die Schraubendruckfeder 26 ist zudem so ausgelegt, dass im Verdichtungstakt zeitlich vor der Zündung des Brennstoffs das Ventil 11 durch den steigenden Brennraumdruck schließt.

Der Kolben 24b der Kolben-Zylinder Einheit 24 ist weiter über eine aus der Zylinderbüchse 24a herausgeführte Stellstange 29 mit einem Kopf 29a an die Leerwegkappe 27 angekoppelt, derart, dass ausgehend von der gezeichneten Offenstellung des Ventils 11 bei einer zum Beispiel pneumatisch gesteuerten Druckbeaufschlagung (Pfeil 30) des Kolbens 24b über den unteren Druckraum 24d die Leerwegkappe 27 (mitsamt Schraubendruckfeder 26) nach oben gezogen wird und dadurch das Ventil 11 mittels der dann wirkenden Ventilfeder 13 geschlossen wird.

Bei Schubbetrieb oder Motorbremsbetrieb wird der oberhalb des Kolbens 24b befindliche Druckraum 24c wie mit dem Pfeil 31 angedeutet zum Beispiel pneumatisch über ein nicht dargestelltes Steuerventil druckbeaufschlagt, wodurch der Kolben 24b nach unten verstellt wird und über die Stellstange 29 mit dem Kopf 29a und die Stütztasse 28 das Ventil 11 ständig geöffnet hält.

Die Funktion der Betätigungseinrichtung bzw. Kolben-Zylinder-Einheit 24 ist im Wesentlichen wie vorbeschrieben, das heißt, dass das Ventil 11 im drucklosen Zustand federbelastet (Schraubendruckfeder 26) geöffnet ist und durch den Brennraumdruck geschlossen werden kann oder dass das Ventil 11 durch Druckbeaufschlagung des Kolbens 24b über den Druckraum 24c ständig geöffnet ist.. Die pneumatische Druckmittelquelle und die erforderlichen Steuerventile sind nicht dargestellt.

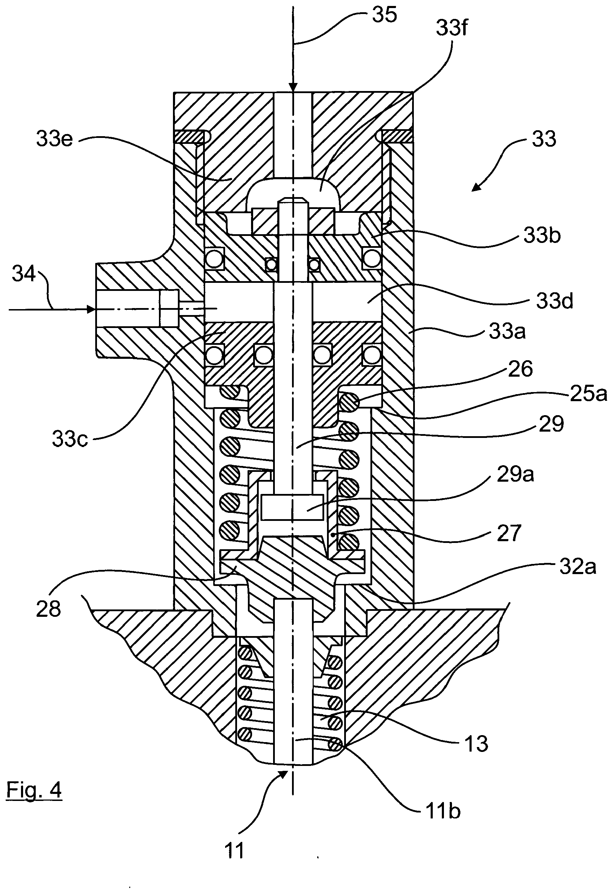

Die Fig. 4 schließlich zeigt eine weitere, erfindungsgemäße Betätigungseinrichtung bzw. Kolben-Zylinder-Einheit 33, die nur soweit beschrieben ist, als sie sich wesentlich von der Betätigungseinrichtung 24 gemäß Fig. 3 unterscheidet. Funktionell gleiche Teile sind mit gleichen Bezugszeichen versehen.

Die Kolben-Zylinder-Einheit 33 ist zum Beispiel hydraulisch steuerbar und weist zwei in einer Zylinderbüchse 33a verschiebbar geführte Kolben 33b, 33c auf. Der dem Ventil 11 zugewandte, untere Kolben 33c ist als Ringkolben ausgeführt, durch den hindurch die Stellstange 29 des oberen Kolbens 33b verläuft.

In der in der Fig. 4 gezeigten Grundstellung (druckloser Zustand) ist das Ventil 11 mit der Vorspannung der Ventilfeder 13 geschlossen, weil die beiden Kolben 33b, 33c so angeordnet und/oder dimensioniert sind, dass die Schraubendruckfeder (26) keine Wirkung entfaltet und somit die Ventilfeder 13 mehr oder weniger alleine wirkt.

Bei einer zum Beispiel hydraulisch gesteuerten Druckbeaufschlagung des unteren Druckraumes 33d zwischen den beiden Kolben 33b, 33c (Pfeil 34) wird der Kolben 33c solange nach unten verfahren, bis er am hier beispielhaft durch einen Durchmessersprung dargestellten zylinderbüchsenseitigen Anschlag 25a zur Anlage kommt, während der obere Kolben 33b an einem ringförmigen Anschlag 33e anliegt. Dabei wird über die eine größere Vorspannkraft als die Ventilfeder 13 aufweisende Schraubendruckfeder 26 das Ventil 11 geöffnet. Die Stützhülse 28 liegt zur Sicherstellung eines definierten Ventilhubs an einem Anschlag 32a auf. Druckluft kann aus dem Brennraum so lange entnommen werden, bis der im Verdichtungstakt steigende Brennraumdruck das Ventil gegen die Kraft der Schraubendruckfeder 26 schließt.

Ein ständiges Öffnen des Ventils 11 wird erzielt, wenn der obere Druckraum 33f druckbeaufschlagt wird (Pfeil 35), wobei dann über den nach unten verlagerten Kolben 33b und dessen Stellstange 29 beziehungsweise deren Kopf 29a die Stütztasse 28 kraftbeaufschlagt wird und somit das Ventil 11 ständig geöffnet wird (bevorzugt im Schubbetrieb oder Motorbremsbetrieb). Die Stütztasse 28 kann sich dabei wiederum am Anschlag 32a abstützen. Die Leerwegkappe 27 dient hier somit anders als bei der Ausführung der Fig. 3 hauptsächlich der Führung der Schraubendruckfeder 26 und kann mit der Stütztasse 28 fest verbunden sein beziehungsweise Bestandteil der Stütztasse 28 sein.

Die eben beispielhaft als hydraulische Drucksteuerung beschriebene Drucksteuerung kann funktionell wie vorbeschrieben über nicht dargestellte Steuerventile und entsprechende Druckmittelquellen bewerkstelligt sein.

### BEZUGSZEICHENLISTE

- 1: Brennkraftmaschine
- 2: Zylinderkurbelgehäuse
- 3: Zylinder
- 4: Hubkolben
- 5: Pleuel
- 6: Zylinderkopf
- 6a: Seitenfläche
- 7: Brennraum
- 8: Gaswechselventil
- 9: Ein- oder Auslasskanal
- 10: Verbindungskanal
- 11: Ventil
- 11a: Ventilteller
- 11b: Ventilschaft
- 12: Abströmkanal
- 13: Ventilfeder
- 14: Betätigungseinrichtung
- 15: Achse
- 16: Kipphebel
- 16a: Arm
- 16b: Arm
- 17: Nocken
- 18: Kolben-Zylinder-Einheit
- 18a: Kolben
- 19: Rollenstößel
- 20: Kolben-Zylinder-Einheit
- 20a: Kolben
- 21: Druckstück
- 22, 23: Druckversorgung
- 24: Betätigungseinrichtung
- 24a: Zylinderbüchse
- 24b: Kolben
- 24c: Druckraum
- 24d: Druckraum
- 25: Abstandshülse
- 25a: Anschlag
- 26: Schraubendruckfeder
- 27: Leerwegkappe
- 28: Stütztasse
- 29: Stellstange
- 29a: Kopf
- 30, 31: Druckversorgung
- 32: Anschlaghülse
- 32a: Anschlag
- 33: Betätigungseinrichtung
- 33a: Zylinderbüchse
- 33b: Kolben
- 33c: Kolben
- 33d: Druckraum
- 33e: Anschlag
- 33f: Druckraum
- 34, 35: Druckversorgung

## Patentansprüche

1. Vorrichtung zum Fördern von Druckluft für druckluftbetriebene Einrichtungen in Kraftfahrzeugen, insbesondere von Bremseinrichtungen in Nutzfahrzeugen, mit einem steuerbaren Ventil (11), über das aus einem Brennraum (7) von zumindest einem Zylinder (3) einer Brennkraftmaschine (1) Druckluft entnehmbar ist, wobei das Ventil (11) außerhalb des Brennraums (7) angeordnet und an den Brennraum (7) angeschlossen ist, und mit einer Betätigungseinrichtung (24), wobei das Ventil (11) über die Betätigungseinrichtung (24) gesteuert ist, und wobei die Betätigungseinrichtung (24) für das Ventil (11) eine Kolben-Zylinder-Einheit mit zumindest einem Kolben (24b) ist, der das über eine Ventilfeder (13) in Schließstellung vorgespannte Ventil (11) in Öffnungsrichtung oder in Öffnungsrichtung und in Schließrichtung beaufschlagt,
**dadurch gekennzeichnet, dass** ein Kolben (24b) der Kolben-Zylinder-Einheit in einer Zylinderbüchse (24a) verschiebbar geführt ist, wobei zu beiden Seiten des Kolbens (24b) je ein Druckraum (24c, 24d) ausgebildet ist, und
dass auf der ventilzugewandten Seite des Kolbens (24b) eine Federeinrichtung (26) angeordnet ist, die sich mittelbar oder unmittelbar an der Zylinderbüchse (24a) abstützt und andererseits auf das Ventil (11) wirkt, wobei die Vorspannkraft der Federeinrichtung (26) so ausgelegt ist, dass diese stärker ist als die das Ventil (11) in die Schließstellung vorspannende Kraft der Ventilfeder (13) und dass diese im Verdichtungstakt zeitlich vor der Brennstoffzündung ab einem definierten Brennraumdruck außer Eingriff bringbar ist, und somit das Ventil (11) mittels der Ventilfeder (13) schließbar ist.

2. Vorrichtung nach Anspruch 1, **dadurch gekennzeichnet, dass** die Federeinrichtung (26) über eine Leerwegkappe (27) oder über eine Leerwegkappe (27) mit zugeordneter ventilseitiger Stütztasse (28) auf das Ventil (11) wirkt, wobei die Leerwegkappe (27) auf einer mit dem Kolben (24b) verbundenen Stellstange (29) verschiebbar gelagert und mit dieser koppelbar ist, dergestalt, dass bei Druckbeaufschlagung eines bezogen auf die Ventilseite unteren Kolbenraums (24d) und einer dadurch erfolgenden Verlagerung des Kolbens (24b) vom Ventil (11) weg, die Leerwegkappe (27) vom Ventil (11) wegverlagert wird und die Federeinrichtung (26) dadurch außer Wirkeingriff gebracht ist, wodurch das Ventil (11) durch die Kraft der Ventilfeder (13) schließt, und
dass bei einer Druckbeaufschlagung eines bezogen auf die Ventilseite oberen Kolbenraums (24c) oder bei drucklosem oberen und unteren Kolbenraum (24c, 24d) eine Verschiebung der Leerwegkappe (27) mittels der Federeinrichtung (26) relativ zur Stellstange (29) freigegeben ist, wodurch die Federeinrichtung (26) die Leerwegkappe (27) in Richtung Ventil (11) vorspannt und damit auf das Ventil (11) wirkt und dieses gegen die Kraft der Ventilfeder (13) öffnet.

3. Vorrichtung zum Fördern von Druckluft für druckluftbetriebene Einrichtungen in Kraftfahrzeugen, insbesondere von Bremseinrichtungen in Nutzfahrzeugen, mit einem steuerbaren Ventil (11), über das aus einem Brennraum (7) von zumindest einem Zylinder (3) einer Brennkraftmaschine (1) Druckluft entnehmbar ist, wobei das Ventil (11) außerhalb des Brennraums (7) angeordnet und an den Brennraum (7) angeschlossen ist, und mit einer Betätigungseinrichtung (33), wobei das Ventil (11) über die Betätigungseinrichtung (33) gesteuert ist, und wobei die Betätigungseinrichtung (33) für das Ventil (11) eine Kolben-Zylinder-Einheit mit zumindest einem Kolben (33b, 33c) ist, der das über eine Ventilfeder (13) in Schließstellung vorgespannte Ventil (11) in Öffnungsrichtung oder in Öffnungsrichtung und in Schließrichtung beaufschlagt,
**dadurch gekennzeichnet, dass** die Kolben-Zylinder-Einheit (33) zwei gegensinnig beaufschlagbare Kolben (33b, 33c) aufweist, wobei vorgesehen ist, dass der eine Kolben (33b) bei einer entsprechenden Beaufschlagung das Ventil (11) in definierten Betriebszuständen der Brennkraftmaschine ständig offen hält und der andere Kolben (33c) das Ventil in definierten Betriebszuständen der Brennkraftmaschine (1) periodisch öffnet, und
dass ein Druckraum (33d) zwischen den beiden Kolben (33c, 33b) so angeordnet und ausgebildet ist, dass der untere Kolben (33c) bei einer Druckbeaufschlagung des Druckraums (33d) in Richtung Ventil (11) verlagerbar ist, bis der untere Kolben (33c) an einem Anschlag (25a) zur Anlage kommt, und
dass auf der ventilzugewandten Seite des unteren Kolbens (33c) eine Federeinrichtung (26) abgestützt ist, die auf das Ventil (11) wirkt, wobei die Vorspannkraft der Federeinrichtung (26) größer ist als diejenige einer das Ventil (11) in die Schließstellung vorspannenden Ventilfeder (13) und wobei die Vorspannkraft der Federeinrichtung (26) zudem so ausgelegt ist, dass diese im Verdichtungstakt der Brennkraftmaschine zeitlich vor der Brennstoffzündung ab einem definierten Brennraumdruck außer Eingriff bringbar ist, und somit das Ventil (11) mittels der Ventilfeder (13) schließbar ist.

4. Vorrichtung nach Anspruch 3, **dadurch gekennzeichnet, dass** der dem Ventil (11) zugewandte untere Kolben (33c) von einer mit dem oberen Kolben (33b) verbundenen Stellstange (29) durchgriffen ist, wobei der untere Kolben (33c) und die Stellstange (29) relativ zueinander verlagerbar sind,
dass die beiden Kolben (33b, 33c) bei einer Druckbeaufschlagung des zwischen den beiden Kolben (33b, 33c) liegenden Druckraums (33d) so definiert verlagerbar sind, insbesondere an Anschlägen (25a, 33e) zur Anlage bringbar sind, dass die Federeinrichtung (26) auf das Ventil (11) wirkt, und
dass der obere Kolben (33b) mitsamt dessen Stellstange (29) so ausgelegt ist, dass bei einer Druckbeaufschlagung des oberen Kolbens (33b) in Richtung zum Ventil (11) hin die Stellstange (29) auf das Ventil (11) wirkt und dieses gegen die Kraft der Ventilfeder (13) r öffnet, insbesondere während der Druckbeaufschlagung dauerhaft öffnet.

5. Vorrichtung nach Anspruch 3 oder 4, **dadurch gekennzeichnet, dass** die beiden Kolben (33b, 33c) so in der Kolben-Zylinder-Einheit aufgenommen und angeordnet sind, dass die Federeinrichtung (26) im drucklosen Zustand nicht wirkt und das Ventil (11) mittels der Vorspannkraft der Ventilfeder (13) geschlossen ist.

6. Vorrichtung nach einem der vorhergehenden Ansprüche, **dadurch gekennzeichnet, dass** das Ventil (11) im Zylinderkopf (6) der Brennkraftmaschine (1) von der zylinderkopfseitigen Brennraumoberfläche zurückgesetzt angeordnet und/oder über den Verbindungskanal (10) mit dem Brennraum (7) verbunden ist.

7. Vorrichtung nach Anspruch 6, **dadurch gekennzeichnet, dass** das Ventil (11) im Wesentlichen parallel zu Gaswechselventilen (8) der Brennkraftmaschine (1) ausgerichtet ist.

8. Vorrichtung nach Anspruch 7, **dadurch gekennzeichnet, dass** die Gaswechselventile (8) und das Ventil (11) parallel zur Zylindermittelachse des zumindest einen Zylinders (3) der Brennkraftmaschine (1) angeordnet sind.

9. Vorrichtung nach einem der vorhergehenden Ansprüche, **dadurch gekennzeichnet, dass** das Ventil (11) mit einem über das Ventil (11) steuerbaren Abströmkanal (12) verbunden ist, wobei bevorzugt ist, dass der über das Ventil (11) gesteuerte Abströmkanal (12) in eine Seitenfläche (6a) des Zylinderkopfs (6) mündet und dort an eine, ein Rückschlagventil aufweisende Druckleitung angeschlossen ist.

10. Vorrichtung nach einem der vorhergehenden Ansprüche, **dadurch gekennzeichnet, dass** das Ventil (11) über die Betätigungseinrichtung (24; 33) mechanisch oder elektrisch oder hydraulisch oder pneumatisch gesteuert ist.

11. Vorrichtung nach einem der vorhergehenden Ansprüche, **dadurch gekennzeichnet, dass** der Kolben (24b; 33b, 33c) das Ventil (11) in Öffnungsrichtung und in Schließrichtung hydraulisch oder pneumatisch beaufschlagt.

12. Vorrichtung nach einem der vorhergehenden Ansprüche, **dadurch gekennzeichnet, dass** der zumindest eine Kolben (24b; 33b, 33c) alternierend, in Abhängigkeit von unterschiedlichen Betriebszuständen der Brennkraftmaschine an wenigstens eine Druckmittelquelle (30, 32; 34, 35) oder Steuerventile anschließbar ist.

13. Fahrzeug, insbesondere Nutzfahrzeug, mit einer Vorrichtung nach Anspruch 1 oder Anspruch 3.

14. Verfahren zum Fördern von Druckluft für druckluftbetriebene Einrichtungen in Kraftfahrzeugen, insbesondere von Bremseinrichtungen in Nutzfahrzeugen, bei dem über ein steuerbares Ventil (11) aus dem Brennraum (7) von zumindest einem Zylinder (3) einer Brennkraftmaschine (1) Druckluft entnommen wird, wobei das Ventil (11) außerhalb des Brennraums (7) angeordnet und an den Brennraum (7) angeschlossen ist, wobei das Ventil (11) über eine Betätigungseinrichtung (24) gesteuert ist, und wobei die Betätigungseinrichtung (24) für das Ventil (11) eine Kolben-Zylinder-Einheit mit zumindest einem Kolben (24b) ist, der das über eine Ventilfeder (13) in Schließstellung vorgespannte Ventil (11) in Öffnungsrichtung oder in Öffnungsrichtung und in Schließrichtung beaufschlagt, **dadurch gekennzeichnet, dass** ein Kolben (24b) der Kolben-Zylinder-Einheit in einer Zylinderbüchse (24a) verschoben wird, wobei zu beiden Seiten des Kolbens (24b) je ein Druckraum (24c, 24d) ausgebildet ist, und
dass auf der ventilzugewandten Seite des Kolbens (24b) eine Federeinrichtung (26) angeordnet ist, die sich mittelbar oder unmittelbar an der Zylinderbüchse (24a) abstützt und andererseits auf das Ventil (11) wirkt, wobei die Vorspannkraft der Federeinrichtung (26) so ausgelegt ist, dass diese stärker ist als die das Ventil (11) in die Schließstellung vorspannende Kraft der Ventilfeder (13) und dass diese im Verdichtungstakt zeitlich vor der Brennstoffzündung ab einem definierten Brennraumdruck außer Eingriff gebracht wird, und somit das Ventil (11) mittels der Ventilfeder (13) geschlossen wird.

15. Verfahren zum Fördern von Druckluft für druckluftbetriebene Einrichtungen in Kraftfahrzeugen, insbesondere von Bremseinrichtungen in Nutzfahrzeugen, bei dem über ein steuerbares Ventil (11) aus dem Brennraum (7) von zumindest einem Zylinder (3) einer Brennkraftmaschine (1) Druckluft entnommen wird, wobei das Ventil (11) außerhalb des Brennraums (7) angeordnet und an den Brennraum (7) angeschlossen ist, wobei das Ventil (11) über eine Betätigungseinrichtung (33) gesteuert ist, und wobei die Betätigungseinrichtung (33) für das Ventil (11) eine Kolben-Zylinder-Einheit mit zumindest einem Kolben (33b, 33c) ist, der das über eine Ventilfeder (13) in Schließstellung vorgespannte Ventil (11) in Öffnungsrichtung oder in Öffnungsrichtung und in Schließrichtung beaufschlagt,
**dadurch gekennzeichnet, dass** die Kolben-Zylinder-Einheit (33) zwei gegensinnig beaufschlagbare Kolben (33b, 33c) aufweist, wobei das Ventil (11) durch den einen Kolben (33b) bei einer entsprechenden Beaufschlagung das Ventil (11) in definierten Betriebszuständen der Brennkraftmaschine ständig offen gehalten wird und das Ventil (11) durch den anderen Kolben (33c) in definierten Betriebszuständen der Brennkraftmaschine (1) periodisch geöffnet wird, und
dass ein Druckraum (33d) zwischen den beiden Kolben (33c, 33b) so angeordnet und ausgebildet ist, dass der untere Kolben (33c) bei einer Druckbeaufschlagung des Druckraums (33d) in Richtung Ventil (11) verlagert wird, bis der untere Kolben (33c) an einem Anschlag (25a) zur Anlage kommt, und
dass auf der ventilzugewandten Seite des unteren Kolbens (33c) eine Federeinrichtung (26) abgestützt ist, die auf das Ventil (11) wirkt, wobei die Vorspannkraft der Federeinrichtung (26) größer ist als diejenige einer das Ventil (11) in die Schließstellung vorspannenden Ventilfeder (13) und wobei die Vorspannkraft der Federeinrichtung (26) zudem so ausgelegt ist, dass diese im Verdichtungstakt der Brennkraftmaschine zeitlich vor der Brennstoffzündung ab einem definierten Brennraumdruck außer Eingriff bringbar ist, und somit das Ventil (11) mittels der Ventilfeder (13) schließbar ist.

16. Verfahren nach Anspruch 14 oder Anspruch 15, **dadurch gekennzeichnet, dass** das Ventil (11) mittels einer Betätigungseinrichtung (24; 33) so gesteuert wird, dass das Ventil (11) im Schubbetrieb und/oder Motorbremsbetrieb der Brennkraftmaschine dauerhaft offen gehalten wird und in demgegenüber anderen Betriebszuständen das Ventil (11) nur zeitweise oder periodisch geöffnet wird.

## Claims

1. Apparatus for conveying compressed air for compressed air-operated devices in motor vehicles, in particular for brake devices in utility vehicles, with a controllable valve (11), via which compressed air can be removed from the combustion chamber (7) of at least one cylinder (3) of an internal combustion engine (1), the valve (11) being arranged outside the combustion chamber (7) and being connected to the combustion chamber (7), and with an actuating device (24), the valve (11) being controlled via the actuating device (24), and the actuating device (24) for the valves (11) being a piston-cylinder unit with at least one piston (24b) which loads the valve (11), preloaded via a valve spring (13) into the closed position, in the opening direction or in the opening direction and in the closing direction, **characterized in that** a piston (24b) of the piston-cylinder unit is guided displaceably in a cylinder liner (24a), in each case one pressure space (24c, 24d) being configured on both sides of the piston (24b), and **in that** a spring device (26) is arranged on that side of the piston (24b) which faces the valve, which spring device (26) is supported indirectly or directly on the cylinder liner (24a) and acts on the other side on the valve (11), the preloading force of the spring device (26) being designed in such a way that it is stronger than that force of the valve spring (13) which preloads the valve (11) into the closed position, and **in that** the spring device (26) can be brought out of engagement in the compression cycle temporally before the fuel ignition from a defined combustion chamber pressure, and therefore the valve (11) can be closed by means of the valve spring (13).

2. Apparatus according to Claim 1, **characterized in that** the spring device (26) acts on the valve (11) via an idle travel cap (27) or via an idle travel cap (27) with an associated valve-side supporting cup (28), the idle travel cap (27) being mounted displaceably on an actuating rod (29) which is connected to the piston (24b), and it being possible for this idle travel cap (27) to be coupled to this actuating rod (29), in such a way that, in the case of pressure loading of a lower (in relation to the valve side) piston space (24d) and a movement, taking place as a result, of the piston (24b) away from the valve (11), the idle travel cap (27) is moved away from the valve (11), and the spring device (26) is brought out of active engagement as a result, as a result of which the valve (11) closes by way of the force of the valve spring (13), and that, in the case of pressure loading of an upper (in relation to the valve side) piston space (24c) or in the case of a pressureless upper and lower piston space (24c, 24d), a displacement of the idle travel cap (27) by means of the spring device (26) relative to the actuating rod (29) is released, as a result of which the spring device (26) preloads the idle travel cap (27) in the direction of the valve (11) and therefore acts on the valve (11) and opens it counter to the force of the valve spring (13).

3. Apparatus for conveying compressed air for compressed air-operated devices in motor vehicles, in particular of brake devices in utility vehicles, with a controllable valve (11), via which compressed air can be removed from the combustion chamber (7) of at least one cylinder (3) of an internal combustion engine (1), the valve (11) being arranged outside the combustion chamber (7) and being connected to the combustion chamber (7), and with an actuating device (33), the valve (11) being controlled via the actuating device (33), and the actuating device (33) for the valve (11) being a piston-cylinder unit with at least one piston (33b, 33c) which loads the valve (11), which is preloaded via a valve spring (13) into the closed position, in the opening direction or in the opening direction and in the closing direction, **characterized in that** the piston-cylinder unit (33) has two pistons (33b, 33c) which can be loaded in opposite directions, it being provided that the one piston (33b), in the case of corresponding loading, constantly holds the valve (11) open in defined operating states of the internal combustion engine, and the other piston (33c) opens periodically in defined operating states of the internal combustion engine (1), and **in that** a pressure space (33d) between the two pistons (33c, 33b) is arranged and configured in such a way that the lower piston (33c) can be moved in the direction of the valve (11) in the case of pressure loading of the pressure space (33d), until the lower piston (33c) comes into contact with a stop (25a), and **in that** a spring device (26) is supported on that side of the lower piston (33c) which faces the valve, which spring device (26) acts on the valve (11), the preloading force of the spring device (26) being greater than that of a valve spring (13) which preloads the valve (11) into the closed position, and the preloading force of the spring device (26) additionally being designed in such a way that this spring device (26) can be brought out of engagement in the compression cycle of the internal combustion engine temporally before the fuel ignition from a defined combustion chamber pressure, and therefore the valve (11) can be closed by means of the valve spring (13).

4. Apparatus according to Claim 3, **characterized in that** the lower piston (33c) which faces the valve (11) is penetrated by an actuating rod (29) which is connected to the upper piston (33b), it being possible for the lower piston (33c) and the actuating rod (29) to be moved relative to one another, **in that**, in the case of pressure loading of the pressure space (33d) which lies between the two pistons (33b, 33c), the two pistons (33b, 33c) can be moved in a defined manner, in particular can be brought into contact with stops (25a, 33e), such that the spring device (26) acts on the valve (11), and **in that** the upper piston (33b) including its actuating rod (29) is designed in such a way that, in the case of pressure loading of the upper valve (33b) in the direction towards the valve (11), the actuating rod (29) acts on the valve (11) and opens it counter to the force of the valve spring (13), in particular opens it steadily during the pressure loading.

5. Apparatus according to Claim 3 or 4, **characterized in that** the two pistons (33b, 33c) are received and arranged in the piston-cylinder unit in such a way that the spring device (26) is not active in the pressureless state and the valve (11) is closed by means of the preloading force of the valve spring (13).

6. Apparatus according to one of the preceding claims, **characterized in that** the valve (11) is arranged in the cylinder head (6) of the internal combustion engine (1) in a manner which is recessed from the cylinder head-side combustion chamber surface and/or is connected via a connecting channel (10) to the combustion chamber (7).

7. Apparatus according to Claim 6, **characterized in that** the valve (11) is oriented substantially parallel to gas exchange valves (8) of the internal combustion engine (1).

8. Apparatus according to Claim 7, **characterized in that** the gas exchange valves (8) and the valve (11) are arranged parallel to the cylinder centre axis of the at least one cylinder (3) of the internal combustion engine (1).

9. Apparatus according to one of the preceding claims, **characterized in that** the valve (11) is connected to an outflow channel (12) which can be controlled via the valve (11), it being preferred that the outflow channel (12) which is controlled via the valve (11) opens into a side surface (6a) of the cylinder head (6) and is connected there to a pressure line which has a check valve.

10. Apparatus according to one of the preceding claims, **characterized in that** the valve (11) is controlled mechanically or electrically or hydraulically or pneumatically via the actuating device (24; 33).

11. Apparatus according to one of the preceding claims, **characterized in that** the piston (24b; 33b, 33c) loads the valve (11) hydraulically or pneumatically in the opening direction and in the closing direction.

12. Apparatus according to one of the preceding claims, **characterized in that** the at least one piston (24b; 33b, 33c) can be connected to at least one pressure medium source (30, 32; 34, 35) or control valves in an alternating manner, in a manner which is dependent on different operating states of the internal combustion engine.

13. Vehicle, in particular utility vehicle, with an apparatus according to Claim 1 or Claim 3.

14. Method for conveying compressed air for compressed air-operated devices in motor vehicles, in particular for brake devices in utility vehicles, in the case of which compressed air is removed from the combustion chamber (7) of at least one cylinder (3) of an internal combustion engine (1) via a controllable valve (11), the valve (11) being arranged outside the combustion chamber (7) and being connected to the combustion chamber (7), the valve (11) being controlled via an actuating device (24), and the actuating device (24) for the valve (11) being a piston-cylinder unit with at least one piston (24b) which loads the valve (11), preloaded via a valve spring (13) into the closed position, in the opening direction or in the opening direction and in the closing direction, **characterized in that** a piston (24b) of the piston-cylinder unit is displaced in a cylinder liner (24a), in each case one pressure space (24c, 24d) being configured on both sides of the piston (24b), and **in that** a spring device (26) is arranged on that side of the piston (24b) which faces the valve, which spring device (26) is supported indirectly or directly on the cylinder liner (24a) and acts on the other side on the valve (11), the preloading force of the spring device (26) being designed in such a way that it is stronger than that force of the valve spring (13) which preloads the valve (11) into the closed position, and **in that** this spring device (26) can be brought out of engagement in the compression cycle temporally before the fuel ignition from a defined combustion chamber pressure, and therefore the valve (11) is closed by means of the valve spring (13).

15. Method for conveying compressed air for compressed air-operated devices in motor vehicles, in particular of brake devices in utility vehicles, in the case of which method compressed air is removed from the combustion chamber (7) of at least one cylinder (3) of an internal combustion engine (1) via a controllable valve (11), the valve (11) being arranged outside the combustion chamber (7) and being connected to the combustion chamber (7), the valve (11) being controlled via an actuating device (33), and the actuating device (33) for the valve (11) being a piston-cylinder unit with at least one piston (33b, 33c) which loads the valve (11), which is preloaded via a valve spring (13) into the closed position, in the opening direction or in the opening direction and in the closing direction, **characterized in that** the piston-cylinder unit (33) has two pistons (33b, 33c) which can be loaded in opposite directions, the valve (11) being constantly held open by way of the one piston (33b), in the case of corresponding loading, in defined operating states of the internal combustion engine, and the valve (11) being opened periodically by way of the other piston (33c) in defined operating states of the internal combustion engine (1), and **in that** a pressure space (33d) between the two pistons (33c, 33b) is arranged and configured in such a way that the lower piston (33c) is moved in the direction of the valve (11) in the case of pressure loading of the pressure space (33d), until the lower piston (33c) comes into contact with a stop (25a), and **in that** a spring device (26) is supported on that side of the lower piston (33c) which faces the valve, which spring device (26) acts on the valve (11), the preloading force of the spring device (26) being greater than that of a valve spring (13) which preloads the valve (11) into the closed position, and the preloading force of the spring device (26) additionally being designed in such a way that this spring device (26) can be brought out of engagement in the compression cycle of the internal combustion engine temporally before the fuel ignition from a defined combustion chamber pressure, and therefore the valve (11) can be closed by means of the valve spring (13).

16. Method according to Claim 14 or Claim 15, **characterized in that** the valve (11) is controlled by means of an actuating device (24; 33) in such a way that the valve (11) is permanently held open in the overrun mode and/or engine braking mode of the internal combustion engine, and the valve (11) is opened only temporarily or periodically in different operating states from these.

## Revendications

1. Dispositif de transport d'air comprimé destiné à des modules à air comprimé de véhicules automobiles, en particulier des modules de freinage de véhicules utilitaires, ledit dispositif comprenant une soupape commandable (11) permettant d'évacuer l'air comprimé d'une chambre de combustion (7) d'au moins un cylindre (3) d'un moteur à combustion interne (1), la soupape (11) étant disposée à l'extérieur de la chambre de combustion (7) et étant raccordée à la chambre de combustion (7), et comprenant un module d'actionnement (24), la soupape (11) étant commandée par le biais du module d'actionnement (24), et le module d'actionnement (24) destiné à la soupape (11) étant une unité piston-cylindre comprenant au moins un piston (24b), qui sollicite la soupape (11), précontrainte dans la position fermée par le biais d'un ressort de soupape (13), dans le sens de l'ouverture ou dans le sens de l'ouverture et dans le sens de la fermeture,
**caractérisé en ce que**
un piston (24b) de l'unité piston-cylindre est guidé de manière coulissante dans une chemise de cylindre (24a), une chambre de pression (24c, 24d) étant formée des deux côtés du piston (24b), et
du côté du piston (24b) qui est dirigé vers la soupape est disposé un module à ressort (26) qui s'appuie directement ou indirectement sur la chemise de cylindre (24a) et qui agit d'autre part sur la soupape (11), la force de précontrainte du module à ressort (26) étant conçue de façon à être supérieure à la force du ressort de soupape (13) qui précontraint la soupape (11) jusque dans la position fermée et à ce que ledit ressort de soupape soit désengagé à partir d'une pression de chambre de combustion définie dans le cycle de compression avant que le carburant ne soit enflammé, et ainsi à ce que la soupape (11) puisse être fermée au moyen du ressort de soupape (13).

2. Dispositif selon la revendication 1, **caractérisé en ce que** le module à ressort (26) agit sur la soupape (11) par le biais d'un capuchon de course vide (27) ou d'un capuchon de course à vide (27) auquel est associée une coupelle d'appui côté soupape (28), le capuchon de course à vide (27) étant monté de manière coulissante sur une tige de réglage (29) reliée au piston (24b) et pouvant être accouplé à celle-ci de manière à ce que, lorsqu'une pression est appliquée à une chambre de piston inférieure (24d) par rapport au côté soupape et qu'il en résulte un déplacement du piston (24b) depuis la soupape (11), le capuchon de course à vide (27) est éloigné de la soupape (11) et le module à ressort (26) est ainsi désengagé, de sorte que la soupape (11) se ferme sous la force du ressort de soupape (13), et
lorsqu'une pression est appliquée à une chambre de piston supérieure (24c) par rapport au côté soupape ou lorsque les chambres de piston supérieure et inférieure (24c, 24d) sont dépressurisées, un coulissement du capuchon de course à vide (27) est libéré par rapport à la tige de réglage (29) au moyen du module à ressort (26), de sorte que le module à ressort (26) précontraint le capuchon de course à vide (27) en direction de la soupape (11) et agit ainsi sur la soupape (11) et ouvre celle-ci en s'opposant à la force du ressort de soupape (13).

3. Dispositif de transport d'air comprimé destiné à des modules à air comprimé de véhicules automobiles, en particulier des modules de freinage de véhicules utilitaires, ledit dispositif comprenant une soupape commandable (11) permettant d'évacuer l'air comprimé d'une chambre de combustion (7) d'au moins un cylindre (3) d'un moteur à combustion interne (1), la soupape (11) étant disposée à l'extérieur de la chambre de combustion (7) et étant raccordée à la chambre de combustion (7), et comprenant un module d'actionnement (33), la soupape (11) étant commandée par le biais du module d'actionnement (33), et le module d'actionnement (33) destiné à la soupape (11) étant une unité piston-cylindre comprenant au moins un piston (33b, 33c) qui sollicite la soupape (11), précontrainte dans la position fermée par le biais d'un ressort de soupape (13), dans le sens de l'ouverture ou dans le sens de l'ouverture et dans le sens de la fermeture,
**caractérisé en ce que**
l'unité piston-cylindre (33) comporte deux pistons (33b, 33c) pouvant être sollicités dans des sens opposés, un piston (33b) étant prévu, lorsqu'il est sollicité de manière appropriée, pour maintenir la soupape (11) constamment ouverte dans des états de fonctionnement définis du moteur à combustion interne et l'autre piston (33c) étant prévu pour ouvrir périodiquement la soupape dans des états de fonctionnement définis du moteur à combustion interne (1), et
une chambre de pression (33d) est disposée entre les deux pistons (33c, 33b) et est conçue de telle sorte que le piston inférieur (33c) puisse être déplacé en direction de la soupape (11) lorsque la chambre de pression (33d) est mise sous pression jusqu'à ce que le piston inférieur (33c) vienne en appui sur une butée (25a), et
un module à ressort (26) qui agit sur la soupape (11) venant en appui sur le côté du piston inférieur (33c) qui est dirigé vers la soupape, la force de précontrainte du module à ressort (26) étant supérieure à celle d'un ressort de soupape (13) exerçant une précontrainte sur la soupape (11) jusque dans la position fermée et la force de précontrainte du module à ressort (26) étant en outre conçue de façon à ce que ledit ressort de soupape soit désengagé à partir d'une pression de chambre de combustion définie dans le cycle de compression avant que le carburant ne soit enflammé, et ainsi à ce que la soupape (11) puisse être fermée au moyen du ressort de soupape (13).

4. Dispositif selon la revendication 3, **caractérisé en ce que**
le piston inférieur (33c), dirigé vers la soupape (11), est traversé par une tige de réglage (29) reliée au piston supérieur (33b), le piston inférieur (33c) et la tige de réglage (29) étant déplaçables l'un par rapport à l'autre,
les deux pistons (33b, 33c) peuvent être déplacés d'une manière définie, lorsque la chambre de pression (33d) située entre les deux pistons (33b, 33c) est mise sous pression, en particulier peuvent être amenés en appui sur des butées (25a, 33e), de sorte que le module à ressort (26) agisse sur la soupape (11), et
le piston supérieur (33b) et sa tige de réglage (29) sont conçus de telle sorte que, lorsque le piston supérieur (33b) est mis sous pression en direction de la soupape (11), la tige de réglage (29) agisse sur la soupape (11) et ouvre celle-ci en s'opposant à la force du ressort de soupape (13), en particulier l'ouvre en permanence pendant la mise en pression.

5. Dispositif selon la revendication 3 ou 4, **caractérisé en ce que** les deux pistons (33b, 33c) sont logés et disposés dans l'unité piston-cylindre de telle manière que le module à ressort (26) n'agisse pas à l'état dépressurisé et que la soupape (11) soit fermée au moyen de la force de précontrainte du ressort de soupape (13).

6. Dispositif selon l'une des revendications précédentes, **caractérisé en ce que** la soupape (11) est disposée dans la tête de cylindre (6) du moteur à combustion interne (1) en retrait de la surface de chambre de combustion côté tête de cylindre et/ou relié à la chambre de combustion (7) par le biais du conduit de liaison (10).

7. Dispositif selon la revendication 6, **caractérisé en ce que** la soupape (11) est orientée sensiblement parallèlement aux soupapes d'échange gazeux (8) du moteur à combustion interne (1).

8. Dispositif selon la revendication 7, **caractérisé en ce que** les soupapes d'échange gazeux (8) et la soupape (11) sont disposées parallèlement à l'axe central de l'au moins un cylindre (3) du moteur à combustion interne (1).

9. Dispositif selon l'une des revendications précédentes, **caractérisé en ce que** la soupape (11) est reliée à un conduit d'évacuation (12) commandable par le biais de la soupape (11), de préférence le conduit d'évacuation (12) commandé par le biais de la soupape (11) débouchant dans une surface latérale (6a) de la tête de cylindre (6) où il est raccordé à une conduite de pression comportant une soupape anti-retour.

10. Dispositif selon l'une des revendications précédentes, **caractérisé en ce que** la soupape (11) est commandée mécaniquement ou électriquement ou hydrauliquement ou pneumatiquement par le biais du module d'actionnement (24 ; 33).

11. Dispositif selon l'une des revendications précédentes, **caractérisé en ce que** le piston (24b ; 33b, 33c) sollicite la soupape (11) hydrauliquement ou pneumatiquement dans le sens de l'ouverture et dans le sens de la fermeture.

12. Dispositif selon l'une des revendications précédentes, **caractérisé en ce que** l'au moins un piston (24b ; 33b, 33c) peut être raccordé alternativement, en fonction de différents états de fonctionnement du moteur à combustion interne, à au moins une source de milieu sous pression (30, 32 ; 34, 35) ou à des soupapes de commande.

13. Véhicule, notamment véhicule utilitaire, comprenant un dispositif selon la revendication 1 ou la revendication 3.

14. Procédé de transport d'air comprimé destiné à des modules à air comprimé de véhicules automobiles, en particulier des modules de freinage de véhicules utilitaires, procédé dans lequel l'air comprimé est prélevé dans la chambre de combustion (7) d'au moins un cylindre (3) d'un moteur à combustion interne (1) par le biais d'une soupape commandable (11), la soupape (11) étant disposée à l'extérieur de la chambre de combustion (7) et étant raccordée à la chambre de combustion (7), la soupape (11) étant commandée par le biais d'un module d'actionnement (24), et le module d'actionnement (24) destiné à la soupape (11) étant une unité piston-cylindre comprenant au moins un piston (24b) qui sollicite la soupape (11), précontrainte dans la position fermée par le biais d'un ressort de soupape (13), dans le sens d'ouverture ou dans le sens d'ouverture et dans le sens de fermeture,
**caractérisé en ce que**
un piston (24b) de l'unité piston-cylindre se déplace dans une chemise de cylindre (24a), une chambre de pression (24c, 24d) étant formée des deux côtés du piston (24b), et
du côté du piston (24b) dirigé vers la soupape est disposé un module à ressort (26) qui s'appuie directement ou indirectement sur la chemise de cylindre (24a) et qui agit d'autre part sur la soupape (11), la force de précontrainte du module à ressort (26) étant conçue de façon à être supérieure à la force du ressort de soupape (13) qui exerce une précontrainte sur la soupape (11) jusque dans la position fermée et à ce que ledit ressort de soupape soit désengagé à partir d'une pression de chambre de combustion définie dans le cycle de compression avant que le carburant ne soit enflammé et ainsi à ce que la soupape (11) soit fermée au moyen du ressort de soupape (13).

15. Procédé de transport d'air comprimé destiné à des modules à air comprimé de véhicules automobiles, en particulier des modules de freinage de véhicules utilitaires, procédé dans lequel l'air comprimé est prélevé dans la chambre de combustion (7) d'au moins un cylindre (3) d'un moteur à combustion interne (1) par le biais d'une soupape commandable (11), la soupape (11) étant disposée à l'extérieur de la chambre de combustion (7) et étant raccordée à la chambre de combustion (7), la soupape (11) étant commandée par le biais d'un module d'actionnement (33), et le module d'actionnement (33) destiné à la soupape (11) étant une unité piston-cylindre comprenant au moins un piston (33b, 33c) qui sollicite la soupape (11), précontrainte dans la position fermée par le biais d'un ressort de soupape (13), dans le sens d'ouverture ou dans le sens d'ouverture et dans le sens de fermeture,
**caractérisé en ce que**
l'unité piston-cylindre (33) comportant deux pistons (33b, 33c) pouvant être sollicités dans des sens opposés, la soupape (11) étant constamment maintenue ouverte par un piston (33b), lorsqu'il est sollicité de manière appropriée, dans des états de fonctionnement définis du moteur à combustion interne et la soupape (11) étant ouverte périodiquement par l'autre piston (33c) dans des états de fonctionnement définis du moteur à combustion interne (1), et
une chambre de pression (33d) est disposée entre les deux pistons (33c, 33b) et est conçue de telle sorte que le piston inférieur (33c) soit déplacé en direction de la soupape (11) lorsque la chambre de pression (33d) est mise sous pression jusqu'à ce que le piston inférieur (33c) vienne en appui sur une butée (25a), et
un module à ressort (26) qui agit sur la soupape (11) s'appuie sur le côté du piston inférieur (33c) qui est dirigé vers la soupape, la force de précontrainte du module à ressort (26) étant supérieure à celle d'un ressort de soupape (13) qui précontraint la soupape (11) dans la position fermée et la force de précontrainte du module à ressort (26) étant en outre conçue de façon à ce que ledit ressort de soupape soit désengagé à partir d'une pression de chambre de combustion définie dans le cycle de compression avant que le carburant ne soit enflammé, et ainsi à ce que la soupape (11) puisse être fermée au moyen du ressort de soupape (13).

16. Procédé selon la revendication 14 ou la revendication 15, **caractérisé en ce que** la soupape (11) est commandée au moyen d'un module d'actionnement (24 ; 33) de manière à ce que la soupape (11) soit maintenue ouverte en permanence lorsque le moteur à combustion interne fonctionne en mode de poussée et/ou en mode de frein moteur et, dans d'autres états de fonctionnement, la soupape (11) n'est ouverte que temporairement ou périodiquement.
